Europäisches Patentamt

European Patent Office

Office européen des brevets

(19)

(11) Numéro de publication : **0 384 827 B1**

(12)

# FASCICULE DE BREVET EUROPEEN

(45) Date de publication du fascicule du brevet :
04.12.91 Bulletin 91/49

(51) Int. Cl.⁵ : **B01J 8/26, F28D 13/00,
// F23C11/02**

(21) Numéro de dépôt : **90400459.5**

(22) Date de dépôt : **20.02.90**

(54) **Régulateur non mécanique du débit de solides établi entre deux milieux fluidisés.**

(30) Priorité : **24.02.89 FR 8902401**

(43) Date de publication de la demande :
**29.08.90 Bulletin 90/35**

(45) Mention de la délivrance du brevet :
**04.12.91 Bulletin 91/49**

(84) Etats contractants désignés :
**AT BE CH DE DK ES FR GB GR IT LI LU NL SE**

(56) Documents cités :
**EP-A- 0 199 655
EP-A- 0 282 777
EP-A- 0 304 523**

(73) Titulaire : **CHARBONNAGES DE FRANCE,
Etablissement public dit:
Tour Albert 1er 65 avenue de Colmar
F-92507 Rueil Malmaison Cédex (FR)**

(72) Inventeur : **Guigon, Pierre François
2 rue du Clos des Vignes
F-60880 Le Meux (FR)**
Inventeur : **Large, Jean-François
61 rue Carnot
F-60200 Compiegne (FR)**
Inventeur : **Vernotte, Vincent Pierre
144/25 rue Anatole France
F-59790 Ronchin (FR)**

(74) Mandataire : **Robert, Jean-Pierre et al
CABINET BOETTCHER 23, rue la Boétie
F-75008 Paris (FR)**

Jouve, 18, rue Saint-Denis, 75001 PARIS

## Description

La présente invention concerne un régulateur du débit de solides existant entre deux lits fluidisés établis dans des enceintes communicantes, qui ne fait appel à aucun organe mécanique de réglage de la section du passage de communication entre les deux milieux.

Lorsqu'on est en présence de deux enceintes de fluidisation alimentées séparément en gaz de fluidisation et communiquant l'une avec l'autre par une ouverture inférieure ménagée dans leur paroi de séparation, on peut établir une circulation de solides entre les deux enceintes dans la mesure où il existe une force motrice tendant à faire circuler les solides.

Cette force motrice peut être la conséquence de plusieurs facteurs :

— une différence de niveau entre l'enceinte amont (niveau supérieur) et l'enceinte aval (niveau inférieur),

— une densité plus faible dans l'enceinte aval,

— une différence des pressions établies au-dessus de chaque lit fluidisé.

Dans de nombreuses applications pratiques, il y a intérêt à pouvoir faire varier le débit de circulation des solides d'une enceinte à l'autre. Ce sera notamment le cas pour un échangeur de chaleur à lit fluidisé lorsqu'on cherchera à modifier la quantité de chaleur échangée entre le débit de solides en circulation et un fluide circulant dans les tubes du faisceau, de façon à régler l'allure de fonctionnement de l'échangeur.

Jusqu'à présent la modulation du débit de circulatiuon des solides était obtenue, par exemple, en agissant sur le débit relatif des gaz de fluidisation dans chaque enceinte, ou en installant au niveau de l'ouverture de communication des deux enceintes un organe de vannage mécanique qui modifie la section de passage, soit enfin par une action simultanée sur ces deux moyens de réglage. D'autres systèmes non mécaniques ont été développés par ailleurs, par exemple des pompes à jet. Cependant tous ces systèmes ont une flexibilité opératoire très faible de l'ordre de 1 à 2.

La présente invention entend proposer un autre moyen pour agir sur ce débit de circulation des solides entre les deux enceintes, qui est de manoeuvre beaucoup plus simple, quine comporte pas les difficultés de l'actionnement d'une vanne en présence de produits à température élevée et qui possède une grande flexibilité opératoire.

A cet effet, elle a donc pour objet un dispositif non mécanique de réglage du débit de solides établi entre deux milieux fluidisés entretenus de manière séparée dans deux enceintes adjacentes communiquant par une ouverture inférieure, ménagée dans leur paroi de séparation, cette ouverture étant encadrée par des panneaux déflecteurs pour les gaz de fluidisation de chaque enceinte, chaque panneau déflecteur délimitant un compartiment non alimenté en gaz de fluidisation, de chaque côté de la paroi.

Selon l'invention, ce dispositif comprend de chaque côté de la paroi de séparation, à l'intérieur du compartiment correspondant un injecteur de gaz d'aération, l'injecteur situé dans le compartiment aval délivrant un débit de gaz constant, l'injecteur situé dans le compartiment amont délivrant un débit de gaz réglable.

Il suffit donc de délivrer un débit d'aération constant dans le compartiment aval et d'agir simplement sur le débit d'aération immédiatement en amont de l'ouverture pour faire varier le débit de solides traversant cet orifice de communication dans des proportions allant au moins de 1 à 10. La consommation de gaz d'aération est très inférieure à celle nécessaire à la fluidisation dans chacune des enceintes.

Par l'expérience, on a pu déterminer des valeurs de ces débits (qui conditionnent les vitesses de sortie du gaz des injecteurs, pour des sections de passage données) qui permettent d'optimiser la fonction de réglage. Ces débits dépendent de la taille granulométrique moyenne des solides mis en oeuvre.

Ainsi, pour des particules de l'ordre de 200 à 250 μm, il est nécessaire que les débits de gaz délivré par chaque injecteur (aval et amont) engendrent des vitesses superficielles du gaz comprises entre une et dix fois la vitesse minimale de fluidisation, mesurées à la section maximale de chaque compartiment (section de communication entre le compartiment et l'enceinte correspondante). Lorsque les particules sont plus fines, il faut étendre cette plage de variation de débits, par exemple de 1 à 20 fois pour des particules de 80 μm de diamètre.

Le dispositif selon l'invention a pour effet de limiter le débit de circulation des solides. L'effet de circulation peut être créé par un des moyens évoqués à la page 1 ; par exemple, la présence de tubes échangeurs dans l'une des enceintes peut avoir pour conséquence, une différence de densité entre les deux enceintes et engendrer par conséquent une force motrice de circulation, comme il est décrit dans le brevet français No 2581173. Le dispositif selon l'invention permet de régler le débit de cette circulation entre zéro et la valeur maximale créée par l'effet de circulation.

Dans un mode de réalisation simple de ce dispositif, l'ouverture de communication est ménagée entre une paroi inférieure horizontale au niveau des grilles de fluidisation de chaque enceinte et la paroi de séparation verticale, les panneaux déflecteurs étant dressés sur cette paroi inférieure horizontale de chaque côté de l'ouverture, chaque panneau étant incliné d'un angle compris entre 0 et 45 degrés par rapport au plan de l'ouverture tandis que chaque injecteur est constitué par une rampe, par exemple tubulaire, ouverte dans le compartiment par une seule fente longitudinale ou une pluralité d'orifices d'injection, chaque rampe étant fixée au panneau déflecteur correspondant au-dessus du bord supérieur de l'ouverture, assez près de celui-ci pour la rampe amont et entre l'altitude de la rampe amont et le bord du panneau déflecteur correspondant pour la rampe aval.

L'orientation des ouvertures d'injection peut être quelconque dans le volume limité par les panneaux déflecteurs.

L'invention sera mieux comprise à l'aide de la description ci-après d'un mode de réalisation et d'une variante de ce dernier.

Il sera fait référence au dessin annexé dans lequel :
— la figure 1 représente un dispositif de réglage mis en place entre deux enceintes de fluidisation;
— la figure 2 représente une variante de réalisation de la figure 1.

Sur cette figure on a représenté une première enceinte 1 de fluidisation accolée et mise en communication avec une seconde enceinte 2 de fluidisation. Ces deux enceintes 1 et 2 ont chacune une grille 3, 4 respectivement et leur propre arrivée de gaz de fluidisation 5, 6 respectivement, ce qui permet de fluidiser séparément le contenu de l'une et de l'autre enceinte. L'enceinte 1 possède dans sa partie supérieure un tube 7 d'évacuation de trop plein dirigé vers le bas, et une paroi supérieure 8 de fermeture qui est traversée par un tube descendant 9 par où arrive le solide en particules à fluidiser.

L'enceinte 2 est séparée de l'enceinte 1 par une paroi 11 qui a une ouverture inférieure 12 de communication, cette ouverture 12 étant ménagée à la base de la paroi 11 entre cette dernière et une paroi inférieure horizontale 13.

L'enceinte 2 possède également un déversoir 14, à une altitude telle qu'il existe une différence de hauteur H entre le niveau de solide du lit 10 de l'enceinte 1 qui est le plus élevé et le niveau de solide du lit 15 de l'enceinte 2. Cette différence de hauteur H produit une force motrice qui fait circuler les solides de l'enceinte 1 vers l'enceinte 2 au travers de l'ouverture 12, lorsque les enceintes sont pressurisées de manière égale. La force motrice peut résulter d'une pressurisation différente dans chaque enceinte ; dans ce cas, la différence de hauteur entre les niveaux de solide des deux lits peut être nulle voire inverse de celle du cas de figure.

La circulation des solides peut avoir pour cause d'autres facteurs qu'une différence de niveau ou de pression entre les deux enceintes. C'est ainsi que si l'enceinte 2 comporte un faisceau de tubes, le dispositif fonctionnant comme un échangeur thermique par exemple, la densité du lit 15 sera globalement plus faible que celle du lit 10 et, de ce fait, une circulation s'établira entre les enceintes 1 et 2 au travers de l'ouverture 12. Une telle disposition est décrite dans le document FR-A-2581173. Il peut également y avoir un différence de densité si la vitesse de fluidisation de l'enceinte 2 est plus importante, que celle réalisée dans l'enceinte 1.

Afin de protéger l'ouverture 12 des flux de fluidisation traversant les grilles 3 et 4, et d'éviter des interactions d'une enceinte sur l'autre au travers de l'ouverture 12, celle-ci est bordée par des panneaux déflecteurs 16, 17 dressés à partir de la paroi inférieure horizontale 13, et délimitant ainsi des compartiments 20 et 21 de part et d'autre de l'ouverture 12 et de la paroi 11. Les panneaux 16 et 17 écartés l'un de l'autre à leur base d'une valeur déterminée en fonction des débits que l'on veut voir circuler au travers de l'ouverture 12, divergent l'un de l'autre sous un angle qui peut être compris entre 0 et 45° par rapport à la paroi 11. Par exemple, le panneau 17 peut être parallèle à la paroi 11 (inclinaison 0°) et le panneau 16 incliné de 15 à 30° sur cette paroi.

L'ouverture 12 est une ouverture rectangulaire de hauteur $\underline{a}$, les panneaux 16 et 17 ayant la même longueur que la longueur de l'ouverture 12 mais étant de hauteur A. Cette ouverture 12 ne s'étend pas nécessairement sur toute la longueur de la paroi de séparation 11 entre les deux enceintes fluidisées. Dans ce cas, les compartiments 20 et 21 sont limités à leurs extrémités par des panneaux verticaux perpendiculaires à la paroi 11, reliant les extrémités des panneaux 16 et 17 à la paroi 11.

Selon l'invention, on a disposé de chaque côté de la paroi 11, dans chaque compartiment 20 et 21, un injecteur de gaz d'aération 18,19 représenté ici schématiquement sous forme d'une rampe tubulaire s'ouvrant dans le compartiment correspondant au moyen soit d'une fente latérale continue, soit d'une série d'orifices. Cette rampe tubulaire est fixée sur le panneau déflecteur 16 ou 17 correspondant. Elle peut être constituée par des orifices ménagés dans le panneau qui fait lui-même office de rampe en étant partiellement creux.

La rampe d'injection située dans le compartiment 20 est à une altitude $\underline{b}$ telle que $\underline{b}$ soit supérieur à la hauteur $\underline{a}$ de l'ouverture 12. La rampe d'injection 19 située dans le compartiment aval 21 est à une altitude $\underline{c}$ comprise entre $\underline{b}$ et A.

Pour procéder au réglage du débit de solides traversant l'ouverture 12, on injecte par la rampe 19 un débit constant de gaz d'aération (par exemple de l'air, un gaz inerte ou de la vapeur) de manière que les solides issus de l'ouverture soient bien fluidisés.

C'est en réglant le débit d'air d'aération issu de la rampe 18 que l'on parvient à modifier très sensiblement le débit de solides traversant l'ouverture 12.

De manière préférée, la vitesse du fluide d'aération issu de la rampe 19 sera égale à 6 fois la vitesse minimale de fluidisation pour les particules de l'ordre de 200 μm. Cette vitesse sera avantageusement augmentée si l'on traite des particules plus fines (jusqu'à 20 fois pour des particules de l'ordre de 80 μm). Cette vitesse sera mieux mesurée au niveau de la section 21a maximale du compartiment, c'est-à-dire, compte tenu de l'inclinaison des parois celle au niveau de laquelle le compartiment débouche dans l'enceinte 2. Le débit délivré par la rampe 18 sera ajusté en fonction du débit du solide désiré au travers de l'ouverture 12 tout en étant au plus égal à la valeur engendrant une vitesse d'aération au travers de la section 20a égale à la vitesse au travers de la section 21a.

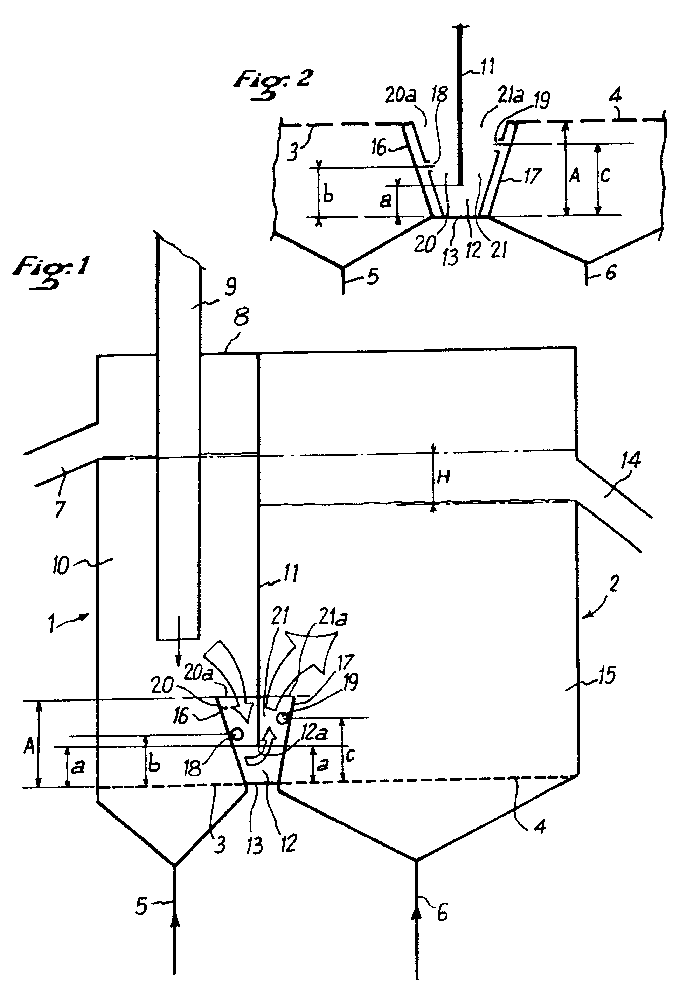

Sur la figure 2 on a représenté partiellement une variante de réalisation de la figure 1 dans laquelle le régulateur est disposé sous le niveau des grilles 3 et 4 de fluidisation. Ainsi les sections 20a et 21a des compartiments 20 et 21 sont au niveau de ces grilles. L'avantage de cette réalisation réside dans la facilité d'amener l'air d'aération dans les rampes de distribution 18 et 19 ici constituées par les panneaux 16 et 17 à double paroi. Cette facilité tient au fait que les panneaux déflecteurs sont au niveau des boîtes à vent.

On mentionnera ci-après des valeurs obtenues expérimentalement avec un dispositif conforme à la figure 1, le solide en particules étant un sable de diamètre moyen égal à 0,21 mm et de masse volumique de 2640 Kg/m³. La vitesse minimale de fluidisation de l'enceinte 1 est de 4 cm par seconde. Le dispositif expérimental utilisé possède deux enceintes de section carrée de 300 mm de côté et de hauteur 1 m, communiquant par l'ouverture 12 de longueur égale à 120 mm et de hauteur a égale à 30 mm. La distance séparant la base des panneaux déflecteurs 16 et 17 est de 56 mm, leur hauteur A est de 155 mm et leur longueur est de 120 mm. L'angle que chacun de ces panneaux fait avec la cloison de séparation 1 est de 15°. La rampe 18 est un tube perforé d'orifices de 2 mm de diamètre, les perforations étant à la hauteur b égale à 35 mm, soit 5 mm au-dessus du bord supérieur 12a de l'ouverture 12 de communication. La rampe 19 est perforée de la même manière, l'altitude c des perforations étant de 45 mm.

Les vitesses de fluidisation dans les enceintes 1 et 2 sont respectivement de deux fois et quatre fois la vitesse minimale de fluidisation définie ci-dessus. Le débit d'air injecté par la rampe 19 est constant et égal à 4,4 m³/h (à la pression atmosphérique). La dimension H séparant les deux déversoirs 7 et 14 est égale à 170 mm. Ainsi, en faisant varier le débit d'air délivré par l'injecteur 18 de 0,2 à 4,3 m³/h à la pression atmosphérique, le débit de solide qui traverse l'ouverture 12 varie de 0,1 à 1,4 Kg/seconde soit dans des proportions de 1 à 14.

L'un des avantages du dispositif selon l'invention réside dans les dimensions réduites de l'orifice de passage et des panneaux déflecteurs formant le dispositif de réglage par rapport au volume des enceintes. Un autre avantage de l'invention réside dans le fait qu'il y a transfert des solides d'une enceinte à l'autre sans transfert des gaz. Les atmosphères gazeuses des deux enceintes sont donc indépendantes et ne se mélangent pas.

L'invention s'applique notamment aux échangeurs externes de chaleur des lits fluidisés circulants utilisés par exemple dans la combustion de combustibles solides. Elle s'applique également aux réacteurs régénérateurs avec compartiments d'isolement.

**Revendications**

1. Dispositif non mécanique de réglage du débit de solides circulant sous l'effet d'une force motrice entre deux lits fluidisés (10, 15) entretenus de manière séparée dans deux enceintes adjacentes (1, 2) communiquant par une ouverture (12) inférieure ménagée dans leur paroi de séparation (11), cette ouverture étant encadrée par des panneaux déflecteurs (16, 17) pour les gaz de fluidisation de chaque enceinte, caractérisé en ce qu'il comprend de chaque côté de la paroi de séparation (11) à l'intérieur du compartiment (20, 21) limité par le panneau (16, 17) déflecteur correspondant, un injecteur de gaz d'aération (18, 19), l'injecteur (19) situé dans le compartiment aval (21) délivrant un débit de gaz constant, l'injecteur (18) situé dans le compartiment amont (20) délivrant un débit de gaz réglable.

2. Dispositif selon la revendication 1, caractérisé en ce que le débit de gaz délivré par chaque injecteur (18, 19) engendre une vitesse superficielle du gaz au travers de la section maximale (20a, 21a) de chaque compartiment (20, 21) de valeur comprise entre une et vingt fois la vitesse minimale de fluidisation, selon la granulométrie des particules.

3. Dispositif selon la revendication 2, caractérisé en ce que la valeur de la vitesse superficielle est égale à 6 fois la vitesse minimale de fluidisation pour des particules de 200 à 250 µm.

4. Dispositif selon la revendication 2, caractérisé en ce que la valeur de la vitesse superficielle est de l'ordre de vingt fois la vitesse minimale de fluidisation pour des particules de 80 µm environ.

5. Dispositif selon l'une quelconque des revendications précédentes caractérisé en ce que l'injecteur amont est une rampe (18) disposée dans le compartiment (20) parallèlement à l'axe longitudinal de l'ouverture (12) entre son bord supérieur (12a) et le bord supérieur du panneau déflecteur (16) correspondant.

6. Dispositif selon la revendication 1 ou la revendication 5, caractérisé en ce que l'injecteur aval (19) est une rampe disposée dans le compartiment (21), parallèlement à l'axe longitudinal de l'ouverture (12), à une altitude comprise entre celle de la rampe amont (18) et le bord supérieur du panneau déflecteur (17) correspondant.

7. Dispositif selon l'une quelconque des revendications précédentes, caractérisé en ce que l'ouverture (12) de communication est ménagée entre une paroi inférieure horizontale (13) au niveau des grilles de fluidisation (3, 4) de chaque enceinte et la paroi de séparation (11), les panneaux déflecteurs (16, 17) étant dressés sur cette paroi inférieure de chaque côté de l'ouverture (12), chaque panneau étant incliné d'un angle compris entre 0 et 45 degrés par rapport au plan de l'ouverture (12).

8. Dispositif selon l'une quelconque des revendications 1 à 6, caractérisé en ce que l'ouverture (12) de communication est ménagée entre une paroi inférieure horizontale (13) située sous le niveau des grilles (3 et 4) de fluidisation de chaque enceinte et la paroi de séparation (11), les panneaux (16, 17) étant dressés sur cette paroi inférieure de chaque côté de l'ouverture (12) et étant chacun inclinés d'un angle compris entre 0 et 45° par rapport au plan de l'ouverture (12).

9. Dispositif selon l'une quelconque des revendications 5 à 8 caractérisé en ce que chaque rampe (18, 19) est constituée par le panneau (16, 17) correspondant à double paroi pour former conduit d'amenée d'air d'aération.

10. Dispositif selon l'une quelconque des revendications 5 à 8, caractérisé en ce que chaque rampe (18, 19) est fixée à la face interne du panneau déflecteur correspondant (16, 17).

11. Dispositif selon la revendication 9 ou la revendication 10, caractérisé en ce que les ouvertures d'injection sont constituées par une fente unique longitudinale de la rampe.

12. Dispositif selon la revendication 9 ou la revendication 10, caractérisé en ce que les ouvertures d'injection sont constituées par une pluralité d'orifices répartis le long de la rampe.

## Patentansprüche

1. Nichtmechanisch wirkende Einrichtung zum Regeln der Lieferleistung von Feststoffen, die unter der Wirkung einer Förderkraft zwischen zwei fluidisierten Schichten (10, 15) zirkulieren, welche in zwei benachbarten, über eine untere, in ihrer Trennwand (11) ausgebildete Öffnung (12) miteinander kommunizierenden Behältern (1, 2) getrennt gehalten werden, wobei die Öffnung (12) von Ablenkflächen (16, 17) für die Fluidisiergase der jeweiligen Behälter flankiert wird, dadurch **gekennzeichnet,** daß sie auf jeder Seite der Trennwand (11) im Inneren der durch die zugeordnete Ablenkfläche (16, 17) begrenzte Abteilung (20, 21) einen Belüftungsgasinjektor (18, 19) aufweist, wobei der Injektor (19), welcher in der stromabwärtigen Abteilung (21) angeordnet ist, einen konstanten Gasstrom liefert, und der Injektor (18), welcher in der stromaufseitigen Abteilung (20) angeordnet ist, einen regelbaren Gasstrom liefert.

2. Einrichtung nach Anspruch 1, dadurch **gekennzeichnet,** daß der von den jeweiligen Injektoren (18, 19) gelieferte Gasstrom eine Oberflächengeschwindigkeit des Gases durch den größten Querschnitt (20a, 21a) der jeweiligen Abteilungen (20, 21) erzeugt, deren Wert in Abhängigkeit von der Korngröße der Partikel zwischen dem einfachen und dem zwanzigfachen der minimalen Fluidisiergeschwindigkeit liegt.

3. Einrichtung nach Anspruch 2, dadurch **gekennzeichnet,** daß der Wert der Oberflächengeschwindigkeit gleich dem sechsfachen der minimalen Fluidisiergeschwindigkeit für Partikel von 200 bis 250 µm ist.

4. Einrichtung nach Anspruch 2, dadurch **gekennzeichnet,** daß der Wert der Oberflächengeschwindigkeit in der Größenordnung des zwanzigfachen der minimalen Fluidisiergeschwindigkeit für Partikel von ungefähr 80 µm ist.

5. Einrichtung nach einem der vorstehenden Ansprüche, dadurch **gekennzeichnet,** daß der stromaufwärtige Injektor eine Injektorbatterie (18) ist, die in der Abteilung (20) parallel zur Längsachse der Öffnung (12) zwischen deren Oberkante (12a) und der Unterkante der zugeordneten Ablenkfläche (16) angeordnet ist.

6. Einrichtung nach Anspruch 1 oder 5, dadurch **gekennzeichnet,** daß der stromabwärtige Injektor (19) eine Injektorbatterie ist, die in der Abteilung (21) parallel zur Längsachse der Öffnung (12) in einer Höhe angeordnet ist, die zwischen der der stromaufwärtigen Injektorbatterie (18) und der Oberkante der zugeordneten Ablenkfläche (17) liegt.

7. Einrichtung nach einem der vorangehenden Ansprüche, dadurch **gekennzeichnet,** daß die Verbindungsöffnung (12) zwischen einer horizontalen, in der Höhe der Fluidisiergitter (3, 4) der jeweiligen Behälter liegenden Wand (13) und der Trennwand (11) ausgebildet ist, wobei die Ablenkflächen (16, 17) auf dieser unteren Wand zu beiden Seiten der Öffnung (12) stehen und jede Ablenkwand um einen Winkel zwischen 0° und 45° gegenüber der Ebene der Öffnung (12) geneigt ist.

8. Einrichtung nach einem der Ansprüche 1 bis 6, dadurch **gekennzeichnet,** daß die Verbindungsöffnung (12) zwischen einer unteren horizontalen Wand (13), die unterhalb der Höhe der Fluidisiergitter (3, 4) der jeweiligen Behälter angeordnet ist, und der Trennwand (11) ausgebildet ist, wobei die Ablenkflächen (16, 17) auf dieser unteren Wand zu beiden Seiten der Öffnung (12) stehen und jeweils in einem Winkel zwischen 0° und 45° gegenüber der Ebene der Öffnung (12) geneigt sind.

9. Einrichtung nach einem der Ansprüche 5 bis 8, dadurch **gekennzeichnet,** daß die Injektorbatterien (18, 19) jeweils durch die zugeordnete, doppelwandig ausgebildete und eine Zuführleitung für die Belüftungsluft bildende Fläche (16, 17) gebildet sind.

10. Einrichtung nach einem der Ansprüche 5 bis 8, dadurch **gekennzeichnet,** daß die Injektorbatterien (18, 19) auf der Innenseite der jeweils zugeordneten Ablenkflächen (16, 17) befestigt sind.

11. Einrichtung nach Anspruch 9 oder 10, dadurch **gekennzeichnet,** daß die Injektoröffnungen jeweils durch einen einzigen Längsschlitz der Injektorbatterie gebildet werden.

12. Einrichtung nach Anspruch 9 oder 10, dadurch **gekennzeichnet,** daß die Injektoröffnungen jewelis durch eine Vielzahl von entlang der Injektorbatterie beabstandeten Öffnungen gebildet werden.

## Claims

1. A non-mechanical device for controlling the flow rate of solids flowing under the effect of a driving force between two fluidized beds (10, 15) maintained separately in two adjacent enclosures (1, 2) which communicate via a bottom opening (12) provided through their separating wall (11), said opening being disposed between deflector panels (16, 17) for deflecting the fluidization gases of each of the enclosures, the device being characterized in that it comprises respective ventilation gas injectors (18, 19) on each side of the separation wall (11) and inside each of the compartments (20, 21) delimited by the corresponding deflector panels (16, 17), the injector (19) situated in the downstream compartment (21) delivering gas at a constant flow rate, and the injector (18) situated in the upstream compartment (20) delivering gas at an adjustable flow rate.

2. A device according to claim 1, characterized in that the flow rate of the gas delivered by each of the injectors (18, 19) generates a surface velocity of the gas through the maximum cross-section (20a, 21a) of each compartment (20, 21) at a value lying between one and twenty times the minimum velocity for fluidization, depending on particle grain size.

3. A device according to claim 2, characterized in that the value of the surface velocity is equal to six times the minimum fluidization velocity for particles of 200 μm to 250 μm.

4. A device according to claim 2, characterized in that the value of the surface velocity is equal to twenty times the minimum fluidization velocity for particles of about 80 μm.

5. A device according to any preceding claim, characterized in that the upstream injector is a bar (18) disposed inside the compartment (20) parallel to the longitudinal axis of the opening (12) between the top edge (12a) of the opening and the top edge of the corresponding deflector panel (16).

6. A device according to any preceding claim, characterized in that the downstream injector (19) is a bar disposed in the compartment (21) parallel to the longitudinal axis of the opening (12) at a height lying between that of the upstream bar (18) and the top edge of the corresponding deflector panel (17).

7. A device according to any preceding claim, characterized in that the inter-communication opening (12) is provided between a horizontal bottom wall (13) level with the fluidization grid (3, 4) of each of the enclosures and the separation wall (11), the deflector panels (16, 17) standing on said bottom wall on either side of the opening (12), each panel sloping at an angle lying between 0° to 45° relative to the plane of the opening (12).

8. A device according to any one of claims 1 to 6, characterized in that the inter-communication opening (12) is provided between a horizontal bottom wall (13) situated beneath the level of the fluidization grids (3 and 4) of each of the enclosures and the separation wall (11), with the panels (16, 17) standing on said bottom wall on either side of the opening (12) and each of them sloping at an angle lying between 0° and 45° relative to the plane of the opening (12).

9. A Device according to any one of claims 5 to 8, characterized in that each bar (18, 19) is constituted by the corresponding panel (16, 17) being a double-walled panel to constitute a feed duct for ventilation air.

10. A device according to any one of claims 5 to 8, characterized in that each bar (18, 19) is fixed to the inside face of the corresponding deflector panel (16, 17).

11. A device according to claim 9 or claim 10, characterized in that the injection openings are constituted by a single longitudinal slot in each bar.

12. A device according to claim 9 or claim 10, characterized in that the injection openings are constituted by a plurality of orifices spaced apart along each bar.

Fig.2

Fig.1